# EUROPEAN PATENT APPLICATION

(11) **EP 4 253 653 A1**
(43) Date of publication of application: **04.10.2023**
(21) Application number: 23165241.3
(22) Date of filing: 29.03.2023
(51) Int. Cl.: E01C 9/08, E01C 5/00

(54) **FIBER-REINFORCED LOAD-SUPPORTING MAT AND METHOD**

(30) Priority: 31.03.2022 US 202217709833
(71) Applicant: Newpark Mats & Integrated Services LLC, The Woodlands, TX 77381 (US)
(72) Inventor: Agrawal, Gaurav, The Woodlands, TX 77381 (US); Manuel, Dane, Youngsville, LA 70592 (US)
(74) Representative: Biallo, Dario

(57) **Abstract**

Mats (100-900) and methods of making the same are described. The mats include a main body (102-902) defined by a plurality of sidewalls and two exterior surface walls (102a,102b) opposing each other, a lip structure (104,106) extending outwardly from the plurality of sidewalls around a portion of a periphery of the main body, and at least one fiber-reinforcement layer (514,606,706,808,810,908,910) arranged between the two exterior surface walls of the mat. The methods include depositing a first deposition layer of material within a mold, positioning at least one fiber-reinforcement layer on the first deposition layer, depositing a second deposition layer of material within the mold over the at least one fiber-reinforcement layer and the first deposition layer, and treating the first deposition layer, the at least one fiber-reinforcement layer, and the second deposition layer to form a mat.

## Description

### BACKGROUND

When performing operations with heavy equipment it may be useful to provide a firm, stable, and continuous support surface to support such heavy equipment or otherwise provide for a stable work surface and/or a support surface over which vehicles may be conveyed. Such support surfaces can provide support for the equipment, vehicles, and personnel involved in work processes and may be configured to withstand severe weather and other harsh environmental impacts. The components of the support surface may be capable of being quickly and easily installed and capable of being easily removed and reused.

Wooden boards or planks have historically been used to construct temporary roadways and equipment support surfaces in remote or undeveloped areas where the terrain lacks sufficient integrity to adequately support trucks and other heavy equipment. Such wooden boards were generally placed end to end, or side by side, to form a continuous or semi-continuous load supporting surface. While individual wooden boards or planks have been used to construct support surfaces for some time, this method of building temporary roadways and other load bearing surfaces suffers from some very significant disadvantages.

In view of this, a variety of mat-type systems have been developed for the construction of temporary roadways and support surfaces. These mat systems typically utilize prefabricated, multi-layered structures (e.g., mats) which can be installed in a variety of configurations and/or orientations to create roadways or other support surfaces. These mats, which are constructed of a number of individual boards or planks affixed together in a variety of configurations, generally interconnect or inter-mesh with one another to form a continuous, or nearly continuous, support surface. It may be advantageous to have improved mats and systems for providing and creating temporary roadways and/or support surfaces.

### SUMMARY

According to some embodiments, mats are provided. The mats include a main body defined by a plurality of sidewalls and two exterior surface walls opposing each other, a lip structure extending outwardly from the plurality of sidewalls around a portion of a periphery of the main body, and at least one fiber-reinforcement layer arranged between the two exterior surface walls of the mat.

In addition to one or more of the features described above, or as an alternative, further embodiments of the mats may include that the at least one fiber-reinforcement layer extends into a portion of the main body and a portion of the lip structure.

In addition to one or more of the features described above, or as an alternative, further embodiments of the mats may include that the at least one fiber-reinforcement layer extends a first distance into the material of the main body and a second distance into the material of the lip structure.

In addition to one or more of the features described above, or as an alternative, further embodiments of the mats may include that the first distance and the second distance are equal.

In addition to one or more of the features described above, or as an alternative, further embodiments of the mats may include that the at least one fiber-reinforcement layer defines a continuous layer around the periphery of the main body.

In addition to one or more of the features described above, or as an alternative, further embodiments of the mats may include that the at least one fiber-reinforcement layer defines a discontinuous layer around the periphery of the main body.

In addition to one or more of the features described above, or as an alternative, further embodiments of the mats may include that the at least one fiber-reinforcement layer comprises a backing and a plurality of fibers attached thereto.

In addition to one or more of the features described above, or as an alternative, further embodiments of the mats may include that the at least one fiber-reinforcement layer contains recycled carpet material.

In addition to one or more of the features described above, or as an alternative, further embodiments of the mats may include that the at least one fiber-reinforcement layer comprises synthetic fibers.

In addition to one or more of the features described above, or as an alternative, further embodiments of the mats may include that the synthetic fibers are made of nylon, polypropylene, or polyester.

In addition to one or more of the features described above, or as an alternative, further embodiments of the mats may include that the lip structure comprises at least one rib structure and at least one gap adjacent the at least one rib structure.

In addition to one or more of the features described above, or as an alternative, further embodiments of the mats may include that the at least one fiber-reinforcement layer is arranged to completely cover at least one of the exterior surface walls.

According to some embodiments, methods for making mats are provided. The methods include depositing a first deposition layer of material within a mold, positioning at least one fiber-reinforcement layer on the first deposition layer, depositing a second deposition layer of material within the mold over the at least one fiber-reinforcement layer and the first deposition layer, and treating the first deposition layer, the at least one fiber-reinforcement layer, and the second deposition layer to form a mat.

In addition to one or more of the features described above, or as an alternative, further embodiments of the methods may include that the treating comprises at least one of an application of heat and an application of pressure.

In addition to one or more of the features described above, or as an alternative, further embodiments of the methods may include that the first deposition layer and the second deposition layer are formed of different compositions of material.

In addition to one or more of the features described above, or as an alternative, further embodiments of the methods may include that the at least one fiber-reinforcement layer contains recycled carpet material.

In addition to one or more of the features described above, or as an alternative, further embodiments of the methods may include that the at least one fiber-reinforcement layer comprises synthetic fibers.

In addition to one or more of the features described above, or as an alternative, further embodiments of the methods may include that the synthetic fibers are made of nylon, polypropylene, or polyester.

In addition to one or more of the features described above, or as an alternative, further embodiments of the methods may include that the at least one fiber-reinforcement layer defines a continuous layer around a periphery of the first deposition layer.

In addition to one or more of the features described above, or as an alternative, further embodiments of the methods may include that the at least one fiber-reinforcement layer defines a discontinuous layer around a periphery of the first deposition layer.

The foregoing features and elements may be combined in various combinations without exclusivity, unless expressly indicated otherwise. These features and elements as well as the operation thereof will become more apparent in light of the following description and the accompanying drawings. It should be understood, however, the following description and drawings are intended to be illustrative and explanatory in nature and non-limiting.

### BRIEF DESCRIPTION OF THE DRAWINGS

The subject matter is particularly pointed out and distinctly claimed at the conclusion of the specification. The foregoing and other features, and advantages of the present disclosure, are apparent from the following detailed description taken in conjunction with the accompanying drawings in which like elements may be numbered alike and:
FIG. 1A is a schematic illustration of a mat that may incorporate embodiments of the present disclosure;
FIG. 1B is a cross-sectional illustration of the mat of FIG. 1A as viewed along the line B-B of FIG. 1A;
FIG. 2 an isometric illustration of a mat that may incorporate embodiments of the present disclosure, with a partial cutaway illustrating an interior structure of the mat;
FIG. 3 is a schematic illustration of a mat assembly of two joined mats that may incorporate embodiments of the present disclosure;
FIG. 4 is a schematic illustration of a portion of a mat that may incorporate embodiments of the present disclosure;
FIG. 5 is a schematic illustration of a portion of a mat incorporating a fiber-reinforcement layer in accordance with an embodiment of the present disclosure;
FIG. 6 is a schematic illustration of a portion of a mat incorporating a fiber-reinforcement layer in accordance with an embodiment of the present disclosure;
FIG. 7 is a schematic illustration of a portion of a mat incorporating a fiber-reinforcement layer in accordance with an embodiment of the present disclosure;
FIG. 8A is a schematic illustration of side elevation view of a mat incorporating a fiber-reinforcement layer in accordance with an embodiment of the present disclosure;
FIG. 8B is a plan view illustration of the mat of FIG. 8A;
FIG. 9 is a plan view illustration of a mat incorporating a fiber-reinforcement layers in accordance with an embodiment of the present disclosure; and
FIG. 10 is a flow process for manufacturing a mat in accordance with an embodiment of the present disclosure.

### DETAILED DESCRIPTION

Characteristics and advantages of the present disclosure and additional features and benefits will be readily apparent to those skilled in the art upon consideration of the following detailed description and accompanying figures. It should be understood that the description herein and associated drawings, being of example embodiments, are not intended to limit the claims of this patent or any patent or patent application claiming priority hereto. On the contrary, the intention is to cover all modifications, equivalents, and/or alternatives as appreciated by those of skill in the art. Many changes may be made to the particular embodiments and details disclosed herein without departing from the scope of the present disclosure.

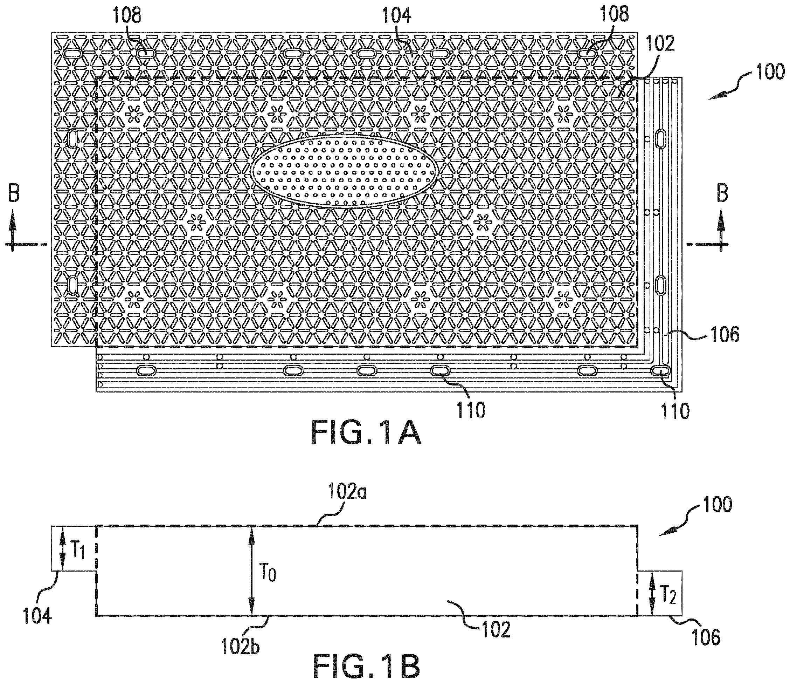

Referring to FIGS. 1A-1B, schematic illustrations of a mat 100 that may incorporate embodiments of the present disclosure are shown. The mat 100 is configured to be a stand-alone structure or may be joined with one or more additional similar mats to define a support surface of a desired shape and/or size. The mat 100 is configured to provide a work or support surface over which vehicles may traverse, equipment may be installed and operated, etc. FIG. 1A illustrates a top-down plan view illustration of the mat 100 and FIG. 1B is a cross-sectional illustration of the mat 100 as viewed along the line B-B in FIG. 1A. The mat 100 includes a main body 102, a first lip structure 104, and a second lip structure 106. As shown, the main body 102 has a main body thickness T₀, and each lip structure 104, 106 has a respective lip structure thickness T₁, T₂. The main body thickness T₀ is defined between opposing exterior surface walls 102a, 102b, which define the exterior surfaces of the mat 100 (e.g., contact surfaces). The exterior surface walls 102a, 102b may include tread, patterns, or the like, which may aid in providing grip or a surface upon which users can walk, move, work, operate, or the like.

In some embodiments, the mat 100 is configured to be joinable with other similar mats, and the lip structure thicknesses T₁, T₂ can each be, for example, equal to half the main body thickness T₀. The relationship of thickness between the main body 102 and the lip structures 104, 104 can allow for joining of two or more mats in any desired orientation (i.e., there is no distinguishable "top" or "bottom" as opposing surfaces are substantially identical). In other configurations, the lip structure thicknesses T₁, T₂ can each be, for example, substantially equal to the main body thickness T₀. Various other thickness relationships may be employed without departing from the scope of the present disclosure.

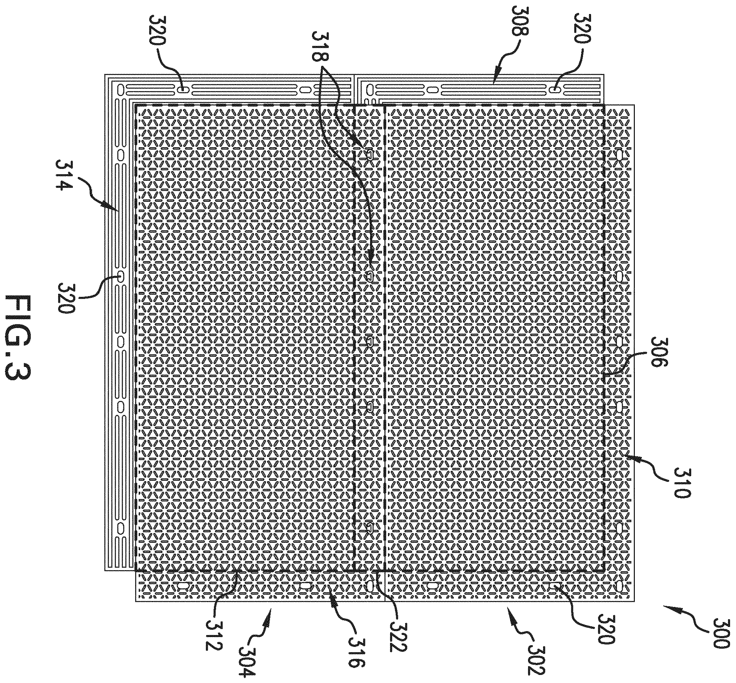

As shown, the lip structures 104, 106 each extend outward from the main body 102 (e.g., outward from the dashed line shown in FIGS. 1A-1B outlining the bounds of the main body 102). In one or more embodiments, each of the lip structures 104, 106 may extend from about half of a perimeter of the main body 102 (with the perimeter indicated by the dashed line of FIGS. 1A-1B). The lip structures 104, 106 each include, as shown, respective pin apertures 108, 110 that are configured to receive a locking pin or other element (not shown) to join or secure together two mats that are arranged adjacent to each other with the pin apertures 108, 110 aligned from the two adjoining mats. Such locking pins can be used to ensure a secure and continuous surface defined by the joined mats. That is, when two mats similar to that shown in FIGS. 1A-1B are joined by one or more locking pins installed through aligned pin apertures 108, 110, a first lip structure 104 on one mat 100 may overlap a second lip structure 106 of the adjacent mat, with the joined first and second lip structures of the two mats having a thickness equal to the main body thickness T₀ (e.g., as shown in FIG. 3). Example locking pins that may be usable with mats of the present include, without limitation, those disclosed in U.S. Patent No. 6,722,831; 8,833,291; and 10,266,994, the contents of which are hereby incorporated by reference in their entireties.

Although shown and described as distinct components or features, the main body 102, the first lip structure 104, and the second lip structure 106 may be formed of a single continuous material (e.g., a uniform body) that is formed in a mold or the like. For example, during manufacturing, two panels or portions may be joined together, with a first panel including or defining the first lip structure 104 and a second panel including or defining the second lip structure 106. In other configurations, the mat 100 can be formed from three or more joined panels or portions of panels. In some embodiments, and as a non-limiting example, the lip structures 104, 106 can be separately attached to, bonded to, or otherwise secured to the main body 102. As another example, the main body 102 can be formed from two panels, each having one of the lip structures 104, 106, and the two panels can be attached, bonded, or otherwise secured together. In still another example, the entire mat 100 can be molded or formed as a single unitary body (i.e., does not require any further assembly/attachment). Accordingly, the illustrative configuration shown and described with respect to FIGS. 1A-1B is not intended to be limiting, but rather is provided for illustrative and explanatory purposes only.

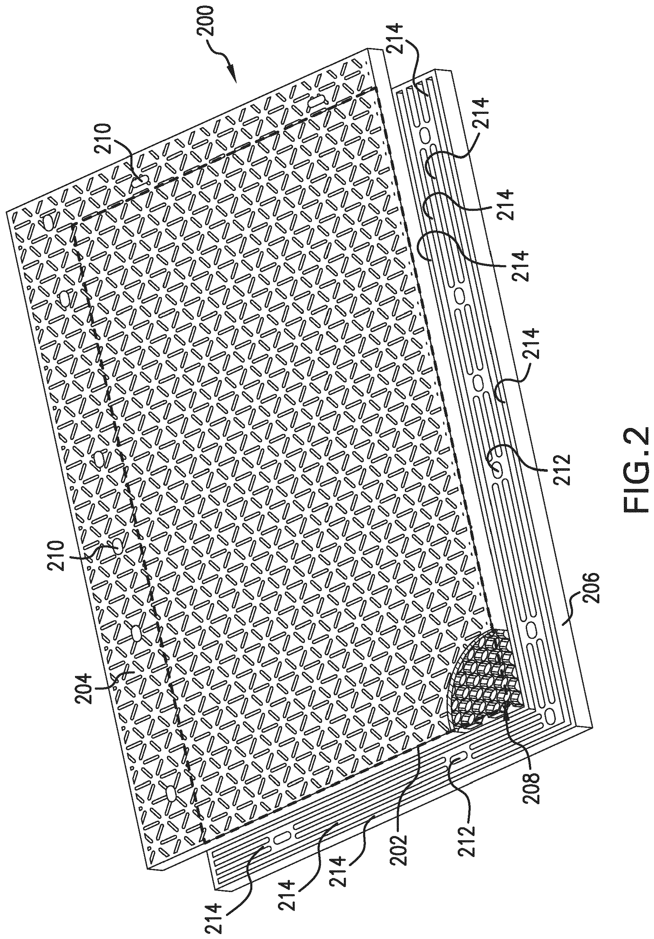

Referring now to FIG. 2, a schematic illustration of a mat 200 that may incorporate embodiments of the present disclosure is shown. The mat 200 may have a similar construction as that shown and described with respect to the mat 100 in FIGS. 1A-1B. For example, the mat 200 may be made from a rigid material capable of withstanding compression forces, such as weights or other loads, positioned on the mat 200. In some non-limiting embodiments, the mat 200 may be constructed of a thermoplastic polymeric material, such as polyethylene or alkathene. In one or more embodiments, the mat 200 can be made of high-density polyethylene, medium-density polyethylene, low-density polyethylene, or mixtures thereof.

The mat 200 includes a main body 202 (indicated by the dashed line in FIG. 2), a first lip structure 204, and a second lip structure 206, with the first and second lip structures 204, 206 extending from the main body 202. As described above, the first and second lip structures 204, 206 extend or cantilever from portions of the exterior surfaces of the main body 202. The lip structures 204, 206 each include respective pin apertures 210, 212 to enable connection to and joining of two adjacent mats. The lip structures 204, 206 may also include respective rib structures 214 (only shown for the second lip structure 206 in this illustration) which may be aligned (e.g., top to bottom) or misaligned with a similar rib structure of an adjacent mat when two mats are arranged adjacent to each other. The rib structures 214 may be substantially linear structures that run or extend the length(s) of the respective lip structures 204, 206. The rib structures 214 may be separated by gaps or the like to form finger-like structures (in cross-section) with the gaps defined therebetween.

The main body 202 includes an interior support structure 208. The interior support structure 208 is configured to provide strength to the mat 200, such as crush strength. The interior support structure 208 may be a combination of voids and ribs that are encapsulated by exterior surfaces of the main body 202. Thus, the interior support structure 208 can permit a reduction in weight as compared to a solid body structured mat. The interior support structure 208 of the main body 202, may be, in some configurations, an interconnected web structure such as in a honeycomb or other geometric pattern, which may be a repeating pattern of the same geometric shape.

As noted, the interior support structure 208 defines voids between interior ribs or similar structures within the main body 202. For example, in one non-limiting example, the voids of the interior support structure 208 may define at least 30% of the interior volume of the main body 202 (i.e., the main body 202 is at least 30% internally hollow in this example). The size and shape of the repeating pattern of the interconnected web structure can be changed or modified to change the quantity of voids in the main body 202. For example, the voids may define at least 45%, at least 50%, at least 60%, at least 70%, and/or other amount of the interior volume of the mat 200 that will be appreciated by those having ordinary skill in the art, depending on the application and use of the mat 200. As will be appreciated by those of skill in the art, inclusion of such voids allows for weight reduction in the total weight of the mat 200. In configurations where the interior support structure 208 is a geometric repeating pattern, each void of the interior support structure 208 may be between and inclusive of about 2.5 inches (6.35-cm) and about 5 inches (12.7-cm) in the largest dimension thereof.

Turning now to FIG. 3, a schematic illustration of a mat assembly 300 that can incorporate embodiments of the present disclosure is shown. The mat assembly 300 includes, in this illustration, two joined mats 302, 304. The mat assembly 300 is a modular or customizable mat system which incorporates mats such as those shown and described above. A first mat 302 of the mat assembly 300 has a respective main body 306 with lip structures 308, 310 extending therefrom. A second mat 304 of the mat assembly 300 has a respective main body 312 with lip structures 314, 316 extending therefrom. The two mats 302, 304 are joined at overlapping portions of the lip structures 308, 316. To fixedly or securely join the first mat 302 to the second mat 304, one or more locking pins 318 are inserted through aligned pin apertures 320 of the two overlapping lip structures 308, 316. As such, a joined and overlapping portion 322 is defined by a portion of the first mat 302 (e.g., a section of the lip structure 308) and a portion of the second mat 304 (e.g., a section of the lip structure 316). The overlapping portion 322 has the same or substantially the same total thickness as each of the main body 306 of the first mat 302 and the main body 312 of the second mat 304. Each of the main bodies 306, 312 may have an interior support structure that includes voids and ribs that define the voids. Such interior support structure may provide strength and rigidity while enabling a relatively light-weight total structure.

FIG. 3 is illustrative of the modular nature of the mats of the present disclosure. Multiple mats (e.g., two or more) may be arranged together to define a continuous and connected support surface. Such support surface may be used to provide a firm and secure surface or ground upon which vehicles may be conveyed, equipment deployed, etc. Although FIG. 3 illustrates only two mats arranged adjacent to each other, those of skill in the art will appreciate that any number of interlocking and arranged mats may be provided to form a desired support surface having a geometry based on the arrangement of the mats.

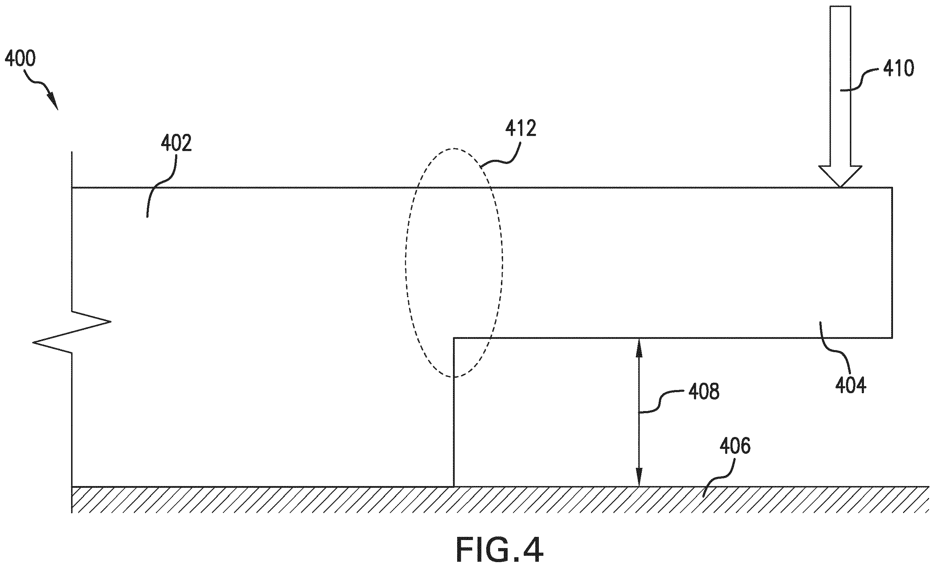

Referring now to FIG. 4, a portion of a mat 400 is illustratively shown. The mat 400 includes a main body 402 and a lip structure 404 extending therefrom. When such a mat is installed in an assembly with other mats, the lip structure 404 may be arranged such that there is no adjoining lip structure from a second (adjacent) mat, and thus the lip structure 404 may be relatively free floating relative to the ground 406 and thus separated by an airgap 408 or the like. Because this lip structure 404 is not supported below the lip structure 404, when a force 410 is applied to the lip structure 404, the lip structure 404 may be bent or flexed downward toward the ground 406. Although the mat 400 may be formed from pliable or flexible material, as described above, an application of the force 410 of sufficient strength may cause the lip structure 404 to bend downward and potentially suffer from material failure at a region 412 where the lip structure 404 extends from the main body 402. Such material failure may be formed as cracks, fractures, rupture, fatigue, breakage, or the like, as will be appreciated by those of skill in the art.

In view of these potential stresses and forces applied to the mats, embodiments of the present disclosure are directed to reinforced mats or portions of mats that can improve the strength of such mats, particularly at locations such as the lip structures.

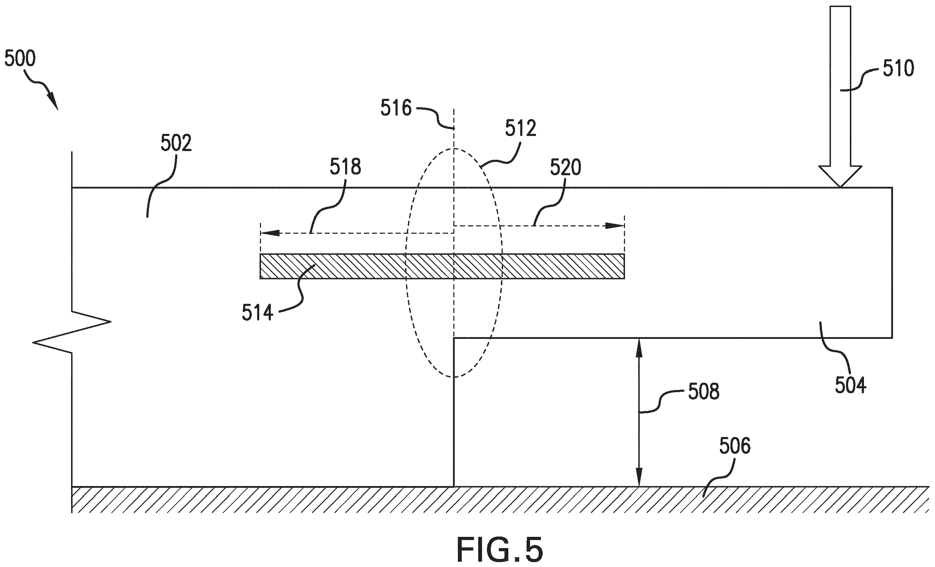

Referring now to FIG. 5, a portion of a mat 500 in accordance with an embodiment of the present disclosure is illustratively shown. The mat 500 includes a main body 502 and a lip structure 504 extending therefrom. The mat 500 and the lip structure 504 may be subject to applied forces in use, (e.g., force 510) similar to that described above with respect to FIG. 4. As shown, the lip structure 504 may be relatively free floating relative to the ground 506 and thus separated therefrom by a gap 508. Because the lip structure 504 is not supported from beneath (e.g., by another lip structure of an adjacent mat), when the force 510 is applied to the lip structure 504, the lip structure 504 may be bent or flexed downward toward the ground 506.

A fiber-reinforcement layer 514 can be positioned within the mat 500. The fiber-reinforcement layer 514 may have a fibrous structure or may be made of a fibrous material, such as carpet, recycled carpet, woven fibers, sheets of woven or embedded fiber, or the like. The fiber-reinforcement layer 514 may be positioned and/or assembled within the mat 500 during the manufacturing process of the mat 500, with the fiber-reinforcement layer 514 positioned within the material that forms the mat 500 prior to final treatment and formation of the mat 500. For example, the mat 500 can be molded or formed about the fiber-reinforcement layer 514 such that the fiber-reinforcement layer 514 is positioned within the mat 500. In some embodiments, the fiber-reinforcement layer 514 may be positioned as a substantially continuous layer arranged about a periphery of the main body 502 at the region 512 where the lip structure 504 extends from the main body 502. The fiber-reinforcement layer 514 may increase the strength at the region 512 and thus can increase the necessary force 510 applied to the mat 500 before damage or failure of the mat 500 occurs, such as a failure or breakage at the lip structure 504.

As shown in FIG. 5, the fiber-reinforcement layer 514 may, in certain embodiments, be generally arranged about the region 512 where the lip structure 504 extends from the main body 502. A center of the region 512 where the lip structure 504 extends from the main body 502 is defined at the edge 516 of the main body 502. The fiber-reinforcement layer 514 may be substantially centered or aligned on the edge 516 such that a portion of the fiber-reinforcement layer 514 extends into the main body 502 and a portion of the fiber-reinforcement layer 514 extends into the lip structure 504. As such, the fiber-reinforcement layer 514 spans the edge 516 from the main body 502 to the lip structure 504. The fiber-reinforcement layer 514 may extend a first distance 518 (or length) into the main body 502 and a second distance 520 (or length) into the lip structure 504. In some embodiments, the first distance 518 and the second distance 520 may be equal. In other embodiments, one of the first distance 518 and the second distance 520 may be greater than the other. The distances 518, 520 may be selected to achieve a desired support of the region 512 between the main body 502 and the lip structure 504. The thickness of the fiber-reinforcement layer 514 can vary depending on the configuration of the mat 500 and the specific material(s) of the mat 500 and/or the fiber-reinforcement layer 514. In some embodiments, the thickness of the fiber-reinforcement layer 514 is less than the thickness of the lip structure thickness (e.g., thickness T₁, T₂ as shown in FIG. 1B). In some non-limiting embodiments, the thickness of the fiber-reinforcement layer 514 may be less than half of or even less than one-quarter of the thickness of the lip structure thickness (e.g., one-quarter or less of T₁ or T₂). In some non-limiting embodiments, the fiber-reinforcement layer 514 may have a thickness that is 1/8 or less than the total mat thickness (e.g., one-eighth or less of T₀).

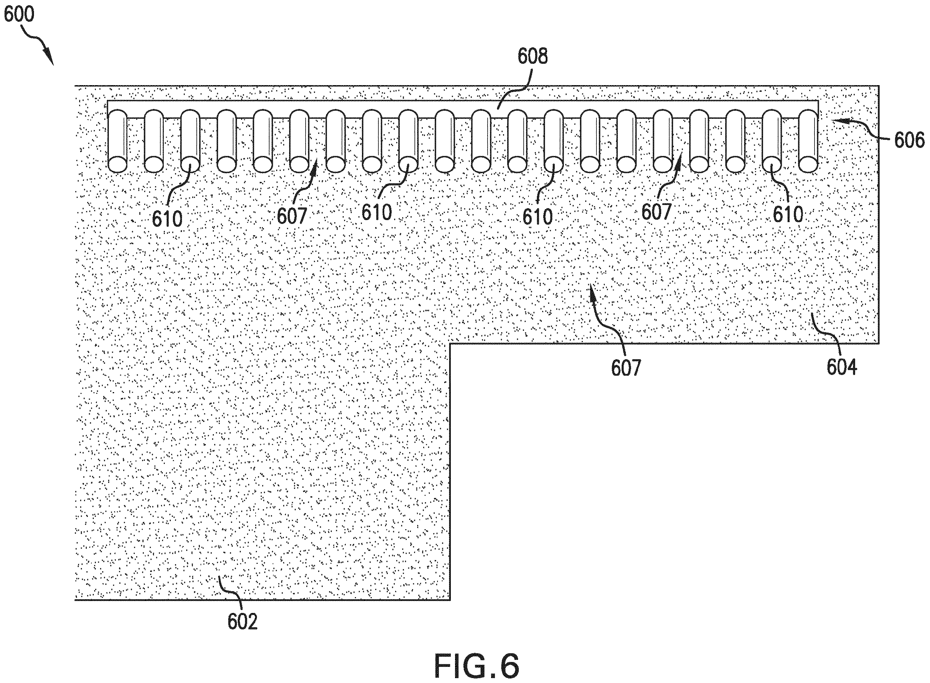

Turning now to FIG. 6, a portion of a mat 600 in accordance with an embodiment of the present disclosure is illustratively shown. The mat 600 includes a main body 602, a lip structure 604 extending therefrom, and a fiber-reinforcement layer 606 embedded within the mat 600. The mat 600, and particularly the main body 602 and the lip structure 604, may be formed of a substantially uniform material 608. For example, the main body 602 and the lip structure 604 may be made from thermoplastic polymeric material 607 (e.g., polyethylene or alkathene), high-density polyethylene, medium-density polyethylene, low-density polyethylene, mixtures thereof, and the like. The material 607 of the mat 600 may be provided as a beads or resin that is heat and/or pressure treated within a mold to bond the particles thereof and form a unitary body. During the manufacturing process, such as before the heat/pressure treatment, the fiber-reinforcement layer 606 may be placed at a desired location (e.g., where the lip structure 604 extends from the main body 602, as described above). With the fiber-reinforcement layer 606 placed, the heat/pressure treatment may be applied to form the mat 600 with the embedded fiber-reinforcement layer 606.

The fiber-reinforcement layer 606, in this illustrative configuration (not to scale), includes a backing 608 and fibers 610 extending therefrom. The backing 608 of the fiber-reinforcement layer 606 may be a woven or mesh structure and the fibers 610 may be affixed to the backing 608 by known mechanisms (e.g., stitching, sewing, bonding, adhesives, tying, and the like). The fiber-reinforcement layer 606 may be a carpet or rug, having a backing (e.g., the backing 608) and tufts or piles (e.g., the fibers 610) extending therefrom. In some embodiments, the backing 608 of the fiber-reinforcement layer 606 may include multiple backing layers and/or adhesives that are configured to secure the fibers 610 thereto. The fibers 610 may be woven or tufted or otherwise attached to the backing 608, as will be appreciated by those of skill in the art. The fibers 610 may be formed from various materials, including, without limitation, synthetic fibers (e.g., nylon, polypropylene, polyester, etc.) and/or natural fibers (e.g., wool, seagrass, coir, jute, sisal, etc.).

During the manufacturing process, the material 607 of the mat 600 may be embedded and/or formed between the fibers 610 of the fiber-reinforcement layer 606. As such, additional strength may be imparted to the mat 600 and thus improved resistance to material failure of the mat 600 may be achieved. The backing 608 may provide additional strength to the mat 600. The backing 608, as noted, may be a woven or mesh layer that may have one or more plies. If a multi-ply configuration is employed, adhesives may be implemented between the various plies of the multi-ply configuration to join the plies together and/or to secure the fibers 610 to the backing 608. As shown in FIG. 6, the fibers 610 are arranged pointing downward and the backing 608 is on a top side thereof. In other configurations, the orientation of the fiber-reinforcement layer 606 may be different (e.g., with the fibers 610 point upward toward the top surface in FIG. 6).

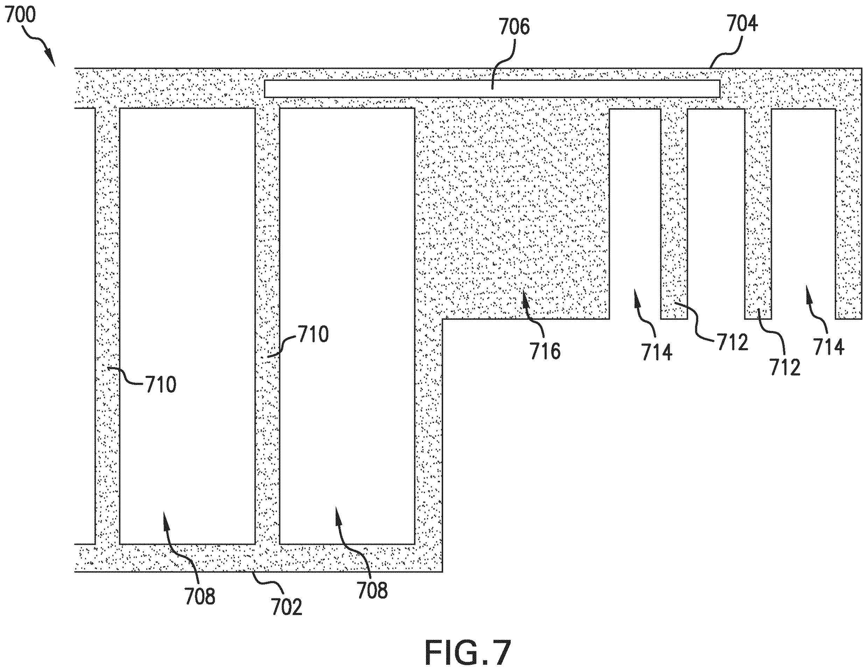

Turning now to FIG. 7, a portion of a mat 700 in accordance with an embodiment of the present disclosure is illustratively shown. The mat 700 includes a main body 702, a lip structure 704 extending therefrom, and a fiber-reinforcement layer 706 embedded within the mat 700. The mat 700 may be substantially similar to that shown and described with respect to FIG. 6. The fiber-reinforcement layer 706 may be substantially similar to the fiber-reinforcement layer of FIG. 6, having a backing and fiber extending therefrom, although such detail is not shown for simplicity and clarity of illustration. In this embodiment, the main body 702 of the mat includes internal voids 708 that are defined between and by internal ribs 710. The internal ribs 710 may be arranged in a geometric pattern to define a pattern of internal voids 708 within the main body 702. Also shown, the lip structure 704 includes a number of rib structures 712 that define gaps 714 therebetween. As shown, the fiber-reinforcement layer 706 is located within material 716 of the mat 700 and does not interfere or impact the inclusion of the internal voids 708 within the main body 702 and/or the inclusion of the rib structures 712 of the lip structure 704.

Although shown and described above with the fiber-reinforcement layer(s) arranged at the region where the lip structures extend from the main body of the mats, such configurations are not to be limiting. For example, in some embodiments, more or less of the mats may include such fiber-reinforcement layer(s). For example, in some embodiments, the entire load bearing surface of the mat may include a fiber-reinforcement layer embedded therein. In other embodiments, a plurality of fiber-reinforcement layers may be distributed at various locations in the mat, such as at specific locations or at intervals about the periphery of the main body.

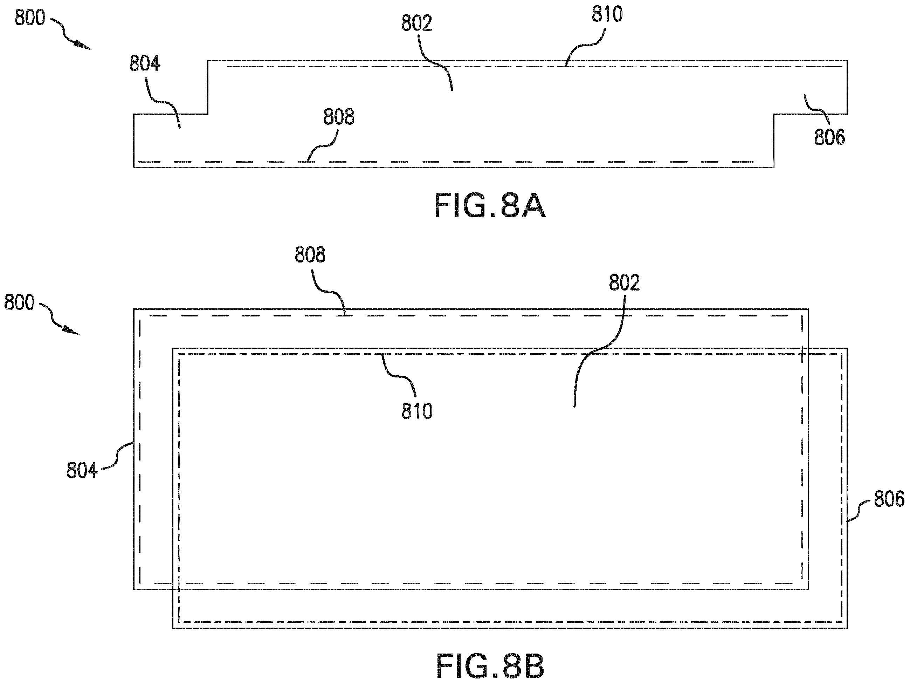

For example, turning now to FIGS. 8A-8B, schematic illustrations of a mat 800 in accordance with an embodiment of the present disclosure are shown. The mat 800 may be configured similar to that shown and described above, having a main body 802, a first lip structure 804, and a second lip structure 806. As shown, the mat 800 includes a first fiber-reinforcement layer 808 embedded to span the main body 802 and the first lip structure 804. Similarly, a second fiber-reinforcement layer 808 is embedded within the mat 800 to span the main body 802 and the second lip structure 806. In such configurations, the fiber-reinforcement layers 808, 810 may provide increase strength to the entire mat surfaces, including at the region where the lips structures 804, 806 extend from the main body 802.

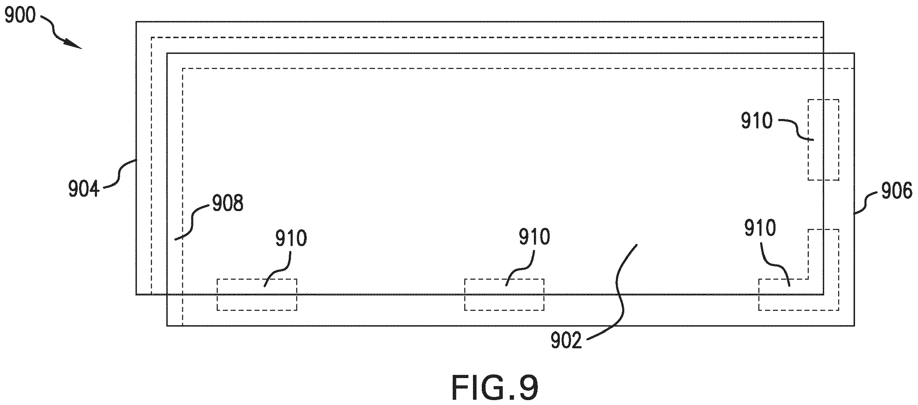

In the above-described embodiments and illustrations, the fiber-reinforcement layers are substantially continuous about the areas/regions to which they provide increased strength. However, such continuity is not required. For example, referring to FIG. 9, a schematic illustration of a mat 900 in accordance with an embodiment of the present disclosure is shown. The mat 900 may be configured similar to that shown and described above, having a main body 902, a first lip structure 904, and a second lip structure 906. In this embodiment, a plurality of fiber-reinforcement layers 908, 910 are distributed and embedded at various locations on the mat 900. The fiber-reinforcement layers 908, 910 may be arranged at one or more locations to increase a strength of the mat 900 at the indicated locations. The fiber-reinforcement layers 908, 910 may take any geometry, as needed, to provide a specific amount of reinforcement to the material of the mat 900. As such, the illustration of FIG.9 is merely for illustrative and example purposes and is not intended to be limiting.

In the illustration of FIG. 9, the fiber-reinforcement layers 908 that support the first lip structure 904 is a substantially continuous layer long the entire region where the first lip structure 904 extends from the main body 902. As shown, the fiber-reinforcement layers 910 that support the second lip structure 906 are arranged in a discontinuous manner and may be positioned to provide support while minimizing use of such fiber-reinforcement layers, such as to reduce weight, reduce material costs, or the like. It will be appreciated that other continuous and/or discontinuous arrangements of fiber-reinforcement layers may be employed without departing from the scope of the present disclosure.

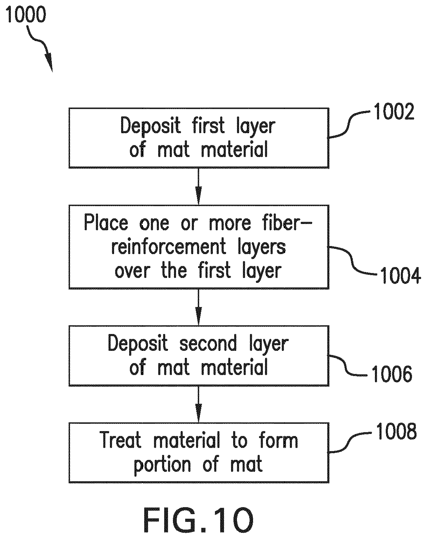

Turning now to FIG. 10, a flow process 1000 for manufacturing a mat in accordance with an embodiment of the present disclosure is shown. The flow process 1000 may be used to form the above described mats having fiber-reinforcement layers embedded therein.

At step 1002, a first deposition layer of material is deposited, such as into a mold or the like. The deposition may be of resin beads, pellets, or granules, particulate material, resin in melted or liquid state, or the like that is used to make up the formed mat. The deposition may be from a hopper or the like, as will be appreciated by those of skill in the art. For example, in a non-limiting embodiment, a mold may be preconfigured to define a negative space to be filled with material to be molded into a panel of a mat. The mold may include an interior pattern structure that may be arranged to define internal structures or features to be formed in the final panel (or subsequently formed mat). The first deposition layer may be a deposition of a resin (e.g., polyethylene, polypropylene, and/or other thermoplastic materials). It will be appreciated that different blends or compositions of different thermoplastic materials may be blended and selected to achieve a specific or predetermined material property (e.g., flexibility, stiffness, tread, wear resistance, heat resistance, etc., and/or combinations thereof).

At step 1004, one or more fiber-reinforcement layers are placed or positioned on top of the first deposition layer of material. The fiber-reinforcement layers may be similar to that described above. For example, the fiber-reinforcement layers may be composed of carpet, recycled carpet, woven fibers, or the like. In one non-limiting example, the fiber-reinforcement layer may be a post-consumer recycled carpet or rug. In some such embodiments, the fiber-reinforcement layer may be pre-compressed to reduce a thickness of the fiber-reinforcement layer relative to a total thickness of the mat or the material thereof. The one or more fiber-reinforcement layers may be arranged such that they are located at specific locations about a periphery of a formed main body of a formed mat, although a full coverage layer (e.g., FIGS. 8A-8B) or a discontinuous arrangement (e.g., FIG. 9) of fiber-reinforcement layers may be employed.

At step 1006, a second deposition layer of material is deposited into the mold to cover the one or more fiber-reinforcement layers. As such, the one or more fiber-reinforcement layers are arranged between material of the first deposition layer of material and the second deposition layer of material. In some embodiments, the material of the first deposition layer may be the same as the material from the second deposition layers. In other embodiments, the first and second deposition layers may be formed from different compositions of material.

At step 1008, a treatment of the poured/deposited materials is applied. The treatment may be the application of heat and/or pressure to the deposited layers within the mold to form the mat from the poured material. One such manufacturing process is described in U.S. Patent No. 6,649,110, entitled "Method for manufacturing molded panels," which is hereby incorporated by reference in its entirety. In some embodiments, a single panel of a mat may be formed through the process 1000, with the formed panel joined with a similar formed panel to make up an assembled mat. In other embodiments, the application of the treatment may be used to compress the deposited layers into a mat structure. During this treatment, the fiber-reinforcement layers are fused into the material of the mat, thus providing for a mechanical reinforcement of the structure of the formed mat.

Advantageously, embodiments of the present disclosure provide for improved strength to mats that are used for temporary roadways and support surfaces. In accordance with embodiments of the present disclosure, structural mats are provided with increased mechanical strength through the inclusion of fiber-reinforcement layers that are embedded into the materials of the mats. In some embodiments, one or more fiber-reinforcement layers may be selective positioned about a periphery of a main body of a mat and overlap with a region where a lip structure extends from the main body. The inclusion of such fiber-reinforcement layers at these regions can increase the mechanical stability and structure of the mat, thus preventing failures and/or damage at locations where portions of the mat may bend (e.g., at an unsupported lip structure). In other embodiments, one or more fiber-reinforcement layers may be arranged at select locations and define a discontinuous arrangement of reinforcement of the mat. In other embodiments, the entire mat surface may be embedded with one or more fiber-reinforcement layers. As such, improved mats for temporary roadways and support surfaces are provided by embodiments of the present disclosure.

As used herein, the terms "about" and "substantially" are intended to include the degree of error associated with measurement of the particular quantity based upon the equipment available at the time of filing the application. For example, "about" may include a range of ± 8%, or 5%, or 2% of a given value or other percentage change as will be appreciated by those of skill in the art for the particular measurement and/or dimensions referred to herein.

The terminology used herein is for the purpose of describing particular embodiments only and is not intended to be limiting of the present disclosure. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an illustrative embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A mat comprising:
a main body defined by a plurality of sidewalls and two exterior surface walls opposing each other;
a lip structure extending outwardly from the plurality of sidewalls around a portion of a periphery of the main body; and
at least one fiber-reinforcement layer arranged between the two exterior surface walls of the mat.

2. The mat of claim 1, wherein the at least one fiber-reinforcement layer extends into a portion of the main body and a portion of the lip structure.

3. The mat of claim 2, wherein the at least one fiber-reinforcement layer extends a first distance into the material of the main body and a second distance into the material of the lip structure, preferably, wherein the first distance and the second distance are equal.

4. The mat of any preceding claim, wherein the at least one fiber-reinforcement layer defines a continuous layer around the periphery of the main body.

5. The mat of any of claims 1-3, wherein the at least one fiber-reinforcement layer defines a discontinuous layer around the periphery of the main body.

6. The mat of any preceding claim, wherein the at least one fiber-reinforcement layer comprises a backing and a plurality of fibers attached thereto.

7. The mat of any preceding claim, wherein the at least one fiber-reinforcement layer comprises at least one of recycled carpet material and synthetic fibers, preferably, wherein the synthetic fibers are made of nylon, polypropylene, or polyester.

8. The mat of any preceding claim, wherein the lip structure comprises at least one rib structure and at least one gap adjacent the at least one rib structure.

9. The mat of any preceding claim, wherein the at least one fiber-reinforcement layer is arranged to completely cover at least one of the exterior surface walls.

10. A method comprising:
depositing a first deposition layer of material within a mold;
positioning at least one fiber-reinforcement layer on the first deposition layer;
depositing a second deposition layer of material within the mold over the at least one fiber-reinforcement layer and the first deposition layer; and
treating the first deposition layer, the at least one fiber-reinforcement layer, and the second deposition layer to form a mat.

11. The method of claim 10, wherein the treating comprises at least one of an application of heat and an application of pressure.

12. The method of any of claims 10-11, wherein the first deposition layer and the second deposition layer are formed of different compositions of material.

13. The method of any of claims 10-12, wherein the at least one fiber-reinforcement layer comprises at least one of recycled carpet material and synthetic fibers, preferably, wherein the synthetic fibers are made of nylon, polypropylene, or polyester.

14. The method of any of claims 10-13, wherein the at least one fiber-reinforcement layer defines a continuous layer around a periphery of the first deposition layer.

15. The method of any of claims 10-13, wherein the at least one fiber-reinforcement layer defines a discontinuous layer around a periphery of the first deposition layer.
